# EUROPEAN PATENT APPLICATION

(11) **EP 2 566 040 A1**
(43) Date of publication of application: **06.03.2013**
(21) Application number: 10850706.2
(22) Date of filing: 28.04.2010
(51) Int. Cl.: H02P 5/46

(54) **DEVICE FOR CONTROLLING ELECTRIC MOTOR**

(71) Applicant: TOYOTA JIDOSHA KABUSHIKI KAISHA, Toyota-shi, Aichi-ken, 471-8571 (JP)
(72) Inventor: KIKUNAGA, Atsushi, Toyota-shi, Aichi 471-8571 (JP); HATTORI, Hiroyuki, Toyota-shi, Aichi 471-8571 (JP)
(74) Representative: TBK
(86) International application number: PCT/JP2010/057548
(87) International publication number: WO 2011/135687

(57) **Abstract**

First and second inverters are each controlled based on pulse width modulation using a carrier signal. In order to decrease the noise caused by the first inverter and the second inverter, a frequency (f1) of a carrier signal of the first inverter and a frequency (f2) of a carrier signal of the second inverter are controlled. The frequency (f1) of the carrier signal of the first inverter is changed periodically or randomly within a first preset frequency range (420) as time elapses. The frequency (f2) of the carrier signal of the second inverter is changed periodically or randomly within a second preset frequency range (430) to avoid overlapping the first frequency range (420).

## Description

### TECHNICAL FIELD

The present invention relates to an electric motor control device, and more particularly to controlling a plurality of electric motors in parallel.

### BACKGROUND ART

Pulse width modulation control (PWM control) has conventionally been applied to a power converter (an inverter) that controls driving an alternating-current electric motor. For example, Japanese Patent Laying-Open No. 2007-20320 (PTL 1) describes a PWM inverter device for reducing noise in audibility without increased loss. Specifically, it describes that a carrier frequency that determines a frequency of a PWM pulse is periodically or randomly fluctuated only by a prescribed frequency range with any carrier frequency defined as the center. In addition, PTL 1 describes changing the carrier frequency's fluctuation range by an electric motor current value or a frequency command value.

Similarly, Japanese Patent Laying-Open No. 2004-312922 (PTL 2) and Japanese Patent Laying-Open No. 2008-99475 (PTL 3) exist as techniques for lowering noise caused by PWM control. PTL 2 describes that a control device that PWM-controls a plurality of power converters changes a carrier signal frequency for each power converter over time to allow the power converters to have their respective switching elements switched on/off as timed differently.

PTL 3 describes discretely and periodically changing a carrier frequency over time in order to level noise spectra in a desired frequency band in controlling a power conversion device. The document then describes that a value for a carrier frequency to be changed is determined such that harmonics do not have their frequencies superimposed on each other.

Japanese Patent Laying-Open No. 2008-5625 (PTL 4) describes that in order to reduce a ripple of a current output from two converters connected in parallel, the converters are PWM-controlled with carrier signals having phases, respectively, set asynchronously.

### CITATION LIST

### PATENT LITERATURE

PTL 1: Japanese Patent Laying-Open No. 2007-20320
PTL 2: Japanese Patent Laying-Open No. 2004-312922
PTL 3: Japanese Patent Laying-Open No. 2008-99475
PTL 4: Japanese Patent Laying-Open No. 2008-5625

### SUMMARY OF INVENTION

### TECHNICAL PROBLEM

According to PTL 1, causing a carrier frequency of a PWM inverter device to fluctuate can distribute a particular frequency component that is attributed to the carrier frequency, and thus achieve reduced noise.

However, as is also pointed out in PTL 2, when a plurality of inverters (or power converters) operate in parallel, the inverters' respective carrier frequencies will overlap, which may result in an increased overall noise level.

In this regard, PTL 3 is silent on any problem caused in operating a plurality of inverters in parallel. Furthermore, PTL 4 does not take any consideration for noise.

In contrast, PTL 2 describes that each inverter's switching cycle is periodically changed and the inverters undergo such change in accordance with offset phases so that the inverters' switching frequencies for each timing are different (see the Patent Literature, Fig. 2). In PTL 2, however, the switching frequencies are all changed within a frequency range, i.e., the same frequency range is shared by the inverters. As such, with human audibility considered, if instantly the inverters have their carrier frequencies differently, the noise level perceived in the above frequency range may be increased depending on the number of inverters.

The present invention has been made to solve such problems, and an object of the present invention is to reduce noise caused as a plurality of power converters are switched in concurrently operating the power converters to drive a plurality of electric motors.

### SOLUTION TO PROBLEM

The present invention in one aspect provides an electric motor control device including a plurality of power converters, a plurality of motor command operation units, a plurality of carrier generation units, and a plurality of pulse width modulation units, that are associated with a plurality of electric motors, respectively. The plurality of power converters are each configured to include at least one switching element. The plurality of motor command operation units are each configured to generate a control command for a voltage or a current supplied to an associated one of the electric motors. The plurality of carrier generation units generate a plurality of carrier signals, respectively, and a carrier frequency control unit controls the plurality of carrier signals in frequency. The plurality of pulse width modulation units are each configured to control switching on and off the switching element in an associated one of the power converters, based on a comparison between the control command issued from an associated one of the motor command operation units and the carrier signal issued from an associated one of the carrier generation units. The carrier frequency control unit controls the plurality of carrier signals in frequency to fluctuate within a plurality of prescribed frequency ranges associated with the plurality of carrier signals, respectively. The plurality of prescribed frequency ranges are previously set without overlapping one another.

The present invention in another aspect provides a method for controlling an electric motor, including the steps of: controlling in frequency a plurality of carrier signals used to control a plurality of power converters associated with a plurality of electric motors, respectively, and each including at least one switching element; generating the plurality of carrier signals in accordance with a plurality of carrier frequencies, respectively, determined in the step of controlling; generating a control command for one of a voltage and a current each supplied to one of the plurality of electric motors; and generating a signal to control switching on/off the switching element, based on a comparison between the control command and an associated one of the carrier signals, for each of the plurality of electric motors. The step of controlling controls the plurality of carrier frequencies to fluctuate within a plurality of prescribed frequency ranges associated with the plurality of carrier signals, respectively. The plurality of prescribed frequency ranges are previously set without overlapping one another.

Preferably, the plurality of prescribed frequency ranges are set such that none of the plurality of prescribed frequency ranges that are each multiplied by an integer and the plurality of prescribed frequency ranges overlaps one another.

Preferably, the plurality of electric motors are mounted in an electrically powered vehicle. The plurality of power converters are each an inverter. The control command indicates an alternating current voltage applied from the inverter to each phase of each electric motor.

### ADVANTAGEOUS EFFECTS OF INVENTION

The present invention can thus reduce noise caused as a plurality of power converters are switched in concurrently operating the power converters to drive a plurality of electric motors.

### BRIEF DESCRIPTION OF DRAWINGS

Fig. 1 is a schematic block diagram generally showing a configuration of a hybrid car representing one example of an electrically powered vehicle to which an electric motor control device is applied in accordance with an embodiment of the present invention.
Fig. 2 is a nomographic chart showing a relation among rotation speeds of an engine and motor generators in the hybrid car in Fig. 1.
Fig. 3 is a circuit diagram showing a configuration of an electric system for driving a motor generator shown in Fig. 1.
Fig. 4 is a functional block diagram of the electric motor control device according to the embodiment of the present invention.
Fig. 5 is a waveform diagram for illustrating PWM control by a pulse width modulation unit shown in Fig. 4.
Fig. 6 is a conceptual diagram for illustrating how a carrier frequency is controlled in each inverter.
Fig. 7 is a conceptual diagram showing distribution of sound pressure levels of noise in carrier frequency control shown in Fig. 6.
Fig. 8 is a conceptual diagram illustrating carrier frequencies of first and second inverters by the electric motor control device according to the embodiment of the present invention.
Fig. 9 is a conceptual diagram showing distribution of sound pressure levels of noise in carrier frequency control by the electric motor control device according to the embodiment of the present invention.
Fig. 10 is a conceptual diagram showing a preferable example of a range in which a frequency is changed in carrier frequency control by the electric motor control device according to the embodiment of the present invention.
Fig. 11 is a flowchart for illustrating a procedure of a process for controlling a carrier frequency, as done by the electric motor control device according to the embodiment of the present invention.

### DESCRIPTION OF EMBODIMENTS

Hereinafter reference will be made to the drawings to describe the present invention in embodiments. In the figures, identical or corresponding components are identically denoted and will not be described repeatedly in detail.

In the following embodiment of the present invention, an electrically powered vehicle having a plurality of electric motors mounted therein will be described as a representative example to which the electric motor control device of the present invention is applied. Note, however, that, as will be apparent from the following description, the present invention is not limited to application to the electrically powered vehicle, but it is also applicable to any loads and devices that adopt a system allowing a plurality of electric motors to be operated concurrently.

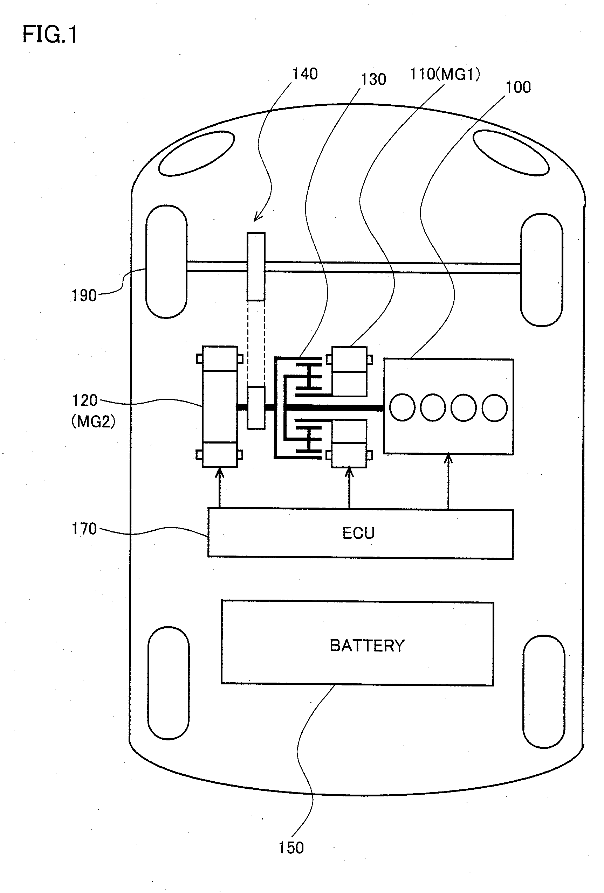

Fig. 1 is a schematic block diagram generally showing a configuration of a hybrid car representing one example of an electrically powered vehicle to which an electric motor control device is applied in accordance with an embodiment of the present invention. It is noted that an electrically powered vehicle refers to a vehicle including a vehicle driving force generation source (representatively, a motor) using electric energy, such as a hybrid car, an electric car, and a fuel cell car collectively.

Referring to Fig. 1, a hybrid car includes an engine 100, a first motor generator 110 (hereinafter simply also referred to as an "MG 1"), a second motor generator 120 (hereinafter simply also referred to as an "MG 2"), a power split device 130, a reduction gear 140, and a battery 150.

The hybrid car shown in Fig. 1 travels as it is driven by force output from at least one of engine 100 and MG 2. Engine 100 and MG 1 and MG 2 are connected to one another via power split device 130. Engine 100 generates force which is in turn split by power split device 130 to two paths. One is a path for driving a front wheel 190 via reduction gear 140. The other is a path for driving MG 1 to generate power.

Each of MG 1 and MG 2 is representatively a three-phase alternating-current rotating electric machine. MG 1 receives force of engine 100 that is split by power split device 130, and thereby generates power. The power generated by MG 1 is used depending on the vehicle's traveling state, the state of charge (SOC) of battery 150, and the like. For example, while the vehicle normally travels, the power generated by MG 1 serves exactly as power for driving MG 2. On the other hand, when battery 150 has an SOC lower than a predetermined value, the power generated by MG 1 is converted from alternating-current to direct-current by an inverter, which will be described later. Thereafter, a converter, which will be described later, regulates voltage and the power is thus stored to battery 150.

While MG 1 is serving as a generator, MG 1 generates negative torque. Herein, negative torque refers to such torque as serving as a load on engine 100. While MG 1 is serving as a motor as it receives supplied power, MG 1 generates positive torque. Herein, positive torque refers to such a torque as not serving as a load on engine 100, that is, such a torque as assisting the rotation of engine 100. This also applies to MG 2.

MG 2 is implemented representatively as a three-phase alternating-current rotating electric machine. MG 2 is driven by at least one of power stored in battery 150 and power generated by MG 1.

MG 2 generates driving force which is in turn transmitted to front wheel 190 via reduction gear 140. Thus, MG 2 assists engine 100, or causes the vehicle to travel by the driving force from MG 2. Note that instead of or in addition to front wheel 190, a rear wheel may be driven.

When the hybrid car is regenerative braked, MG 2 is driven by front wheel 190 via reduction gear 140 and thus operates as a generator. Thus, MG 2 operates as a regenerative brake for converting braking energy into power. The power generated by MG 2 is stored to battery 150.

Power split device 130 is formed of a planetary gear including a sun gear, a pinion gear, a carrier, and a ring gear. The pinion gear is engaged with the sun gear and the ring gear. The carrier supports the pinion gear such that it can revolve. The sun gear is coupled to a rotation shaft of MG 1. The carrier is coupled to a crankshaft of engine 100. The ring gear is coupled to a rotation shaft of MG 2 and reduction gear 140.

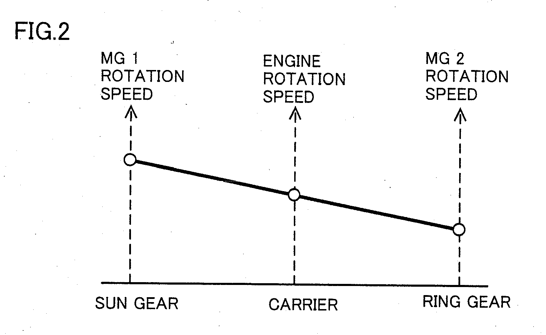

As engine 100 and MG 1 and MG 2 are coupled to one another via power split device 130 formed of the planetary gear, the rotation speeds of engine 100 and MG 1 and MG 2 satisfy a relation as connected with a straight line in the nomographic chart as shown in Fig. 2.

Referring back to Fig. 1, battery 150 is a battery pack constituted of a plurality of secondary battery cells. Battery 150 has voltage for example of approximately 200 V. Battery 150 may be charged not only with power generated by MG 1 and MG 2 but also power supplied from a power supply outside the vehicle.

Engine 100 and MG 1 and MG 2 are controlled by an ECU (electronic control unit) 170. It is noted that ECU 170 may be divided into a plurality of ECUs.

ECU 170 is configured with a not-shown CPU (central processing unit) and an electronic control unit containing a memory, and it is configured to perform operation processing using a value sensed by each sensor, as based on a map and a program stored in the memory. Alternatively, at least a part of the ECU may be configured to perform prescribed arithmetic/logical operation processing with such hardware as electronic circuits.

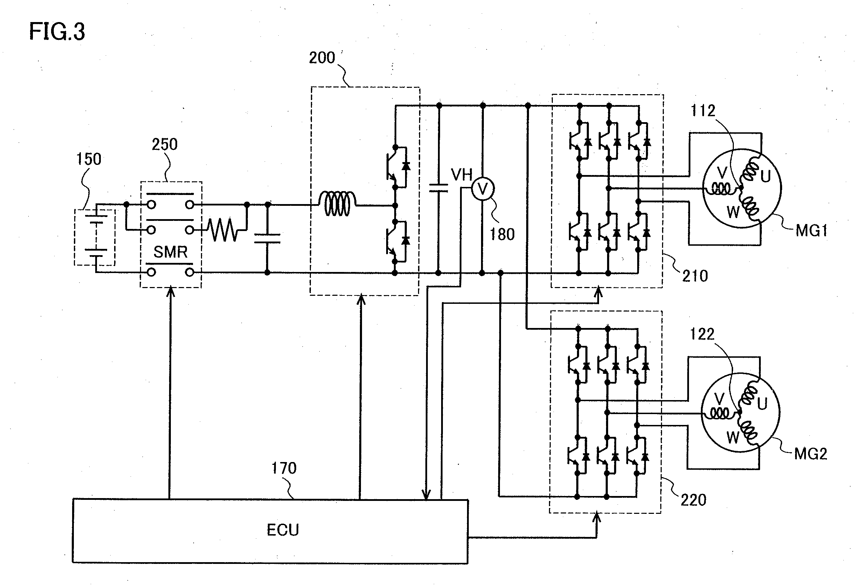

Fig. 3 shows a configuration of an electric system for driving MG 1, MG 2 shown in Fig. 1.

With reference to Fig. 3, the hybrid car is provided with a converter 200, a first inverter 210 associated with MG 1, a second inverter 220 associated with MG 2, and a system main relay (SMR) 250.

Converter 200 includes a reactor, two power semiconductor switching elements (hereinafter simply also referred to as a "switching element") connected in series, an anti-parallel diode associated with each switching element, and a reactor. For the power semiconductor switching element, an IGBT (Insulated Gate Bipolar Transistor), a power MOS (Metal Oxide Semiconductor) transistor, a power bipolar transistor, and the like can be adopted as appropriate. The reactor has one end connected to a positive electrode side of battery 150 and the other end connected to a point of connection between the two switching elements. Each switching element is switched on and off as controlled by ECU 170.

In supplying power discharged from battery 150 to MG 1 or MG 2, the voltage is boosted by converter 200. In contrast, in charging battery 150 with power generated by MG 1 or MG 2, the voltage is buck-boosted by converter 200.

A system voltage VH between converter 200 and first inverter 210 and second inverter 220 is sensed by a voltage sensor 180. A result of sensing by voltage sensor 180 is transmitted to ECU 170.

First inverter 210 is implemented as a typical three-phase inverter and includes a U-phase arm, a V-phase arm, and a W-phase arm connected in parallel. The U-phase arm, the V-phase arm, and the W-phase arm each have two switching elements (an upper arm element and a lower arm element) connected in series. An anti-parallel diode is connected to each switching element.

MG 1 has a U-phase coil, a V-phase coil, and a W-phase coil that are star-connected as a stator winding. Each phase coil has one end connected to a neutral point 112. Each phase coil has the other end connected to a point of connection between the switching elements of a phase arm of first inverter 210.

While the vehicle travels, first inverter 210 controls a current or a voltage of the coil of each phase of MG 1, such that MG 1 operates in accordance with an operation command value (representatively, a torque command value) set for generating an output (a vehicle driving torque, a power generation torque, or the like) requested for causing the vehicle to travel. First inverter 210 can carry out bidirectional power conversion including a power conversion operation for converting direct-current power supplied from battery 150 into alternating-current power for supply to MG 1 and a power conversion operation for converting alternating-current power generated by MG 1 into direct-current power.

As well as first inverter 210, second inverter 220 is implemented as a typical three-phase inverter. As well as MG 1, MG 2 has a U-phase coil, a V-phase coil, and a W-phase coil that are star-connected as a stator winding. Each phase coil has one end connected to a neutral point 122. Each phase coil has the other end connected to a point of connection between the switching elements of a phase arm of second inverter 220.

While the vehicle travels, second inverter 220 controls a current or a voltage of the coil of each phase of MG 2, such that MG 2 operates in accordance with an operation command value (representatively, a torque command value) set for generating an output (a vehicle driving torque, a regenerative braking torque, or the like) requested for causing the vehicle to travel. Second inverter 220 can also carry out bidirectional power conversion including a power conversion operation for converting direct-current power supplied from battery 150 into alternating-current power for supply to MG 2 and a power conversion operation for converting alternating-current power generated by MG 2 into direct-current power.

SMR 250 is provided between battery 150 and converter 200. When SMR 250 is opened, battery 150 is disconnected from an electric system. On the other hand, when SMR 250 is closed, battery 150 is connected to the electric system. The state of SMR 250 is controlled by ECU 170. For example, SMR 250 is closed in response to an operation done to turn on a power-on switch (not shown) operated to provide an indication to start up a system of the hybrid car, whereas SMR 250 is opened in response to an operation done to turn off the power-on switch.

Thus the hybrid vehicle has MG 1 and MG 2, which correspond to "a plurality of electric motors", driven concurrently. Accordingly, first inverter 210 and second inverter 220 respectively associated with MG 1 and MG 2 also have their switching elements switched on/off (or PWM-operated) concurrently.

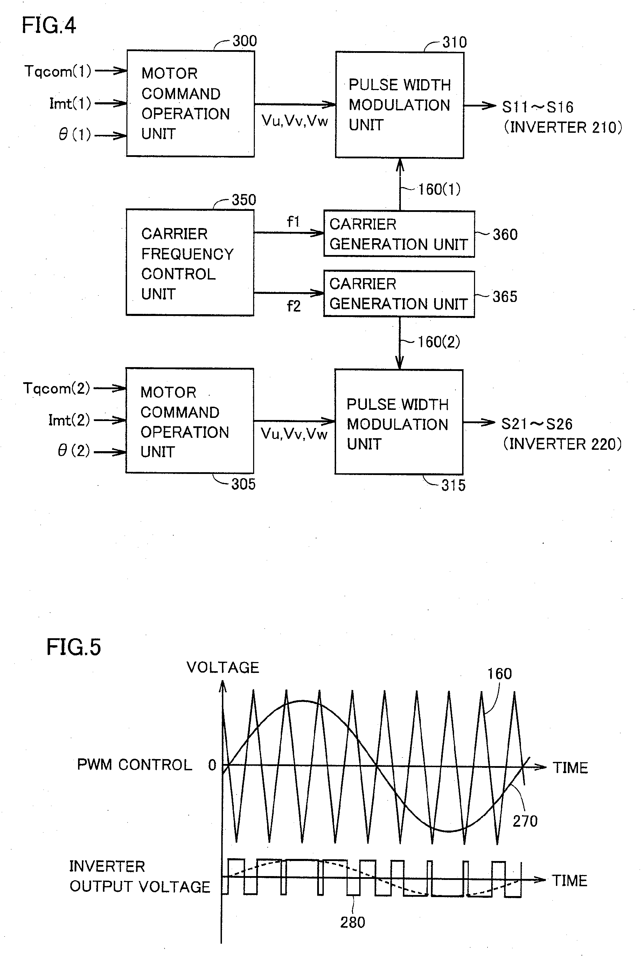

Fig. 4 is a functional block diagram of the electric motor control device according to the embodiment of the present invention. Each functional block shown in Fig. 4 may be realized by configuring in ECU 170 a circuit (hardware) having a function corresponding to the block or may be realized as ECU 170 performs software processing in accordance with a previously set program.

Referring to Fig. 4, ECU 170 includes motor command operation units 300, 305, pulse width modulation units 310, 315, a carrier frequency control unit 350, and carrier generation units 360, 365.

Motor command operation unit 300 operates a control command for first inverter 210, based on MG 1 feedback control. Here, the control command is a command value for a voltage or a current to be supplied to MG 1, MG 2, that is controlled by each inverter 210, 220. In the following, voltage commands Vu, Vv, Vw of the respective phases for MG 1, MG 2 are exemplified as the control command. For example, motor command operation unit 300 controls an output torque of MG 1, based on feedback of a current Imt(1) of each phase of MG 1. Specifically, motor command operation unit 300 sets a current command value corresponding to a torque command value Tqcom(1) of MG 1 and generates voltage commands Vu, Vv, Vw in accordance with a difference between the current command value and motor current Imt(1). In doing so, a control operation accompanied with coordinate transformation (representatively, dq axis transformation) using a rotation angle θ(1) of MG 1 is generally employed.

As well as motor command operation unit 300, motor command operation unit 305 generates a control command for second inverter 220, specifically, voltage commands Vu, Vv, Vw of the respective phases of MG 2, based on MG 2 feedback control. Namely, voltage commands Vu, Vv, Vw are generated based on a motor current Imt(2), a rotation angle θ(2), and a torque command value Tqcom(2) of MG 2.

Pulse width modulation unit 310 generates control signals S 11 to S16 for the switching elements in first inverter 210, based on a carrier signal 160(1) from carrier generation unit 360 and voltage commands Vu, Vv, Vw from motor command operation unit 300. Control signals S11 to S16 control switching on and off the six switching elements constituting the upper and lower arms of the U-phase, V-phase, and W-phase of first inverter 210.

Similarly, pulse width modulation unit 315 generates control signals S21 to S26 for the switching elements in second inverter 220, based on a carrier signal 160(2) from carrier generation unit 365 and voltage commands Vu, Vv, Vw from motor command operation unit 305. Control signals S21 to S26 control switching on and off the six switching elements constituting the upper and lower arms of the U-phase, V-phase, and W-phase of second inverter 220.

Pulse width modulation units 310, 315 compare a carrier signal 160 (collectively referring to 160(1) and 160(2)) with voltage commands Vu, Vv, Vw to perform PWM control.

Fig. 5 is a waveform diagram illustrating the PWM control performed by pulse width modulation units 310, 315.

Referring to Fig. 5, in the PWM control, switching on and off the switching elements of the respective phases of each inverter is controlled based on a comparison in voltage between carrier signal 160 and a voltage command 270 (collectively referring to voltage commands Vu, Vv, Vw). Consequently, a pulse width modulation voltage 280 serving as a pseudo sine wave voltage is applied to a coil winding of each phase of MG 1, MG 2 for each phase. Carrier signal 160 can be constructed by a periodic triangular wave or sawtooth wave or the like.

Referring again to Fig. 4, carrier frequency control unit 350 controls a carrier frequency f1 used for PWM control in first inverter 210 and a carrier frequency f2 used for PWM control in second inverter 220.

Carrier generation unit 360 generates carrier signal 160(1) in accordance with carrier frequency f1 set by carrier frequency control unit 350. Carrier generation unit 360 generates carrier signal 160(2) in accordance with carrier frequency f2 set by carrier frequency control unit 350.

Namely, carrier signals 160(1) and 160(2) change in frequency in accordance with carrier frequencies f1 and f2 set by carrier frequency control unit 350. Consequently, a switching frequency under PWM control in first inverter 210 and second inverter 220 is controlled by carrier frequency control unit 350.

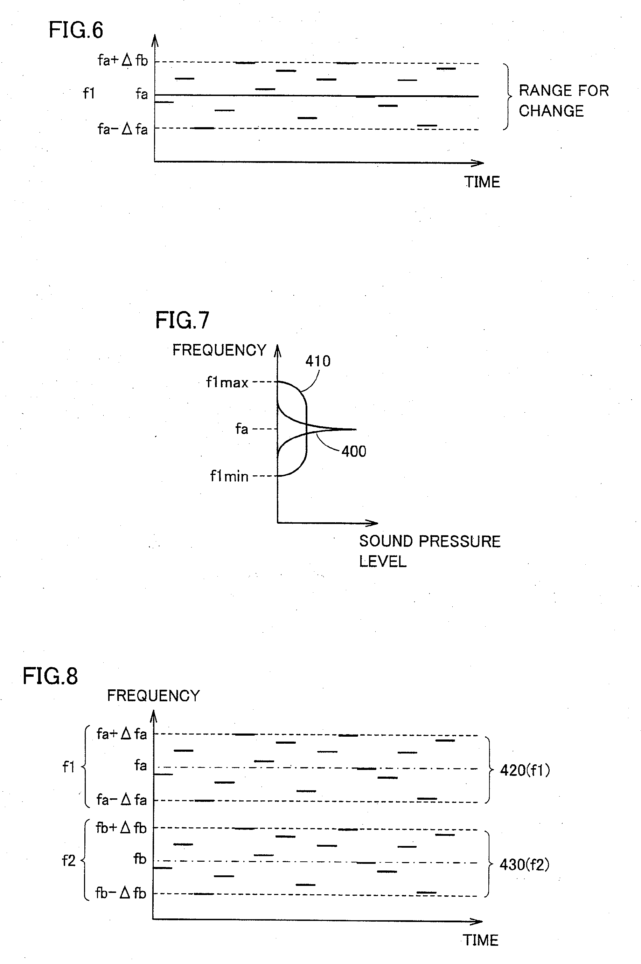

Fig. 6 shows carrier frequency control in each inverter 210, 220. Fig. 6 exemplifies controlling carrier frequency f1 of inverter 210.

Referring to Fig. 6, carrier frequency control unit 350 changes carrier frequency f1 within a prescribed frequency range 420 in accordance with a predetermined pattern periodically or randomly as time elapses. Frequency range 420 has a central value fa, and an upper limit value (f1max) of fa + Δfa and a lower limit value (f1min) of fa - Δfa.

Referring to Fig. 7, a sign 400 denotes a distribution of frequencies of sound pressure levels for carrier frequency f1 fixed at fa. In this case, the sound pressure level of the fixed frequency corresponding to central frequency fa is high, and the noise at that frequency is perceivable by the user.

On the other hand, a sign 410 denotes a distribution of frequencies of sound pressure levels for carrier frequency f1 caused to fluctuate within a frequency range from lower limit value f1min to upper limit value f1max, as shown in Fig. 6. By changing the carrier frequency in a reduced period (for example of approximately 2 to 10 ms), a sound of uniform intensity in the frequency range is recognized by the sense of hearing of a person. Consequently, sound pressure levels can be distributed within that frequency region as indicated by sign 410, and noise's sound pressure level can be lowered.

Carrier frequency control unit 350 also changes carrier frequency f2 of second inverter 220, as well as carrier frequency f1, in accordance with a predetermined pattern periodically or randomly as time elapses.

However, if the plurality of inverters are operating concurrently, applying the Fig. 6 carrier frequency control to each of first inverter 210 and second inverter 220 in the same frequency range will result in a sound pressure level having a distribution twice that indicated in Fig. 7 by sign 410. Accordingly, there is a possibility that the plurality of inverters' overall noise may be more perceivable by the user.

Accordingly, the electric motor control device in the embodiment of the present invention performs carrier frequency control in the plurality of inverters 210, 220, as shown in Fig. 8.

Referring to Fig. 8, carrier frequency control unit 350 (see fig. 5) causes carrier frequency f1 to fluctuate within a prescribed frequency range 430. Frequency range 430 has a central value fb, and an upper limit value (f2max) of fb + Δfb and a lower limit value (f2min) of fb - Δfb.

Then, frequency range 420 of carrier frequency f1 and frequency range 430 of carrier frequency f2 are previously set to avoid overlapping each other. In other words, as in the example of Fig. 8, when fa > fb, then, fa, fb, and Δfa, Δfb are determined so that fa - Δfa > fb + Δfb. Alternatively, when fb > fa, then, fa, fb, and Δfa, Δfb are determined so that fb - Δfb > fa + Δfa.

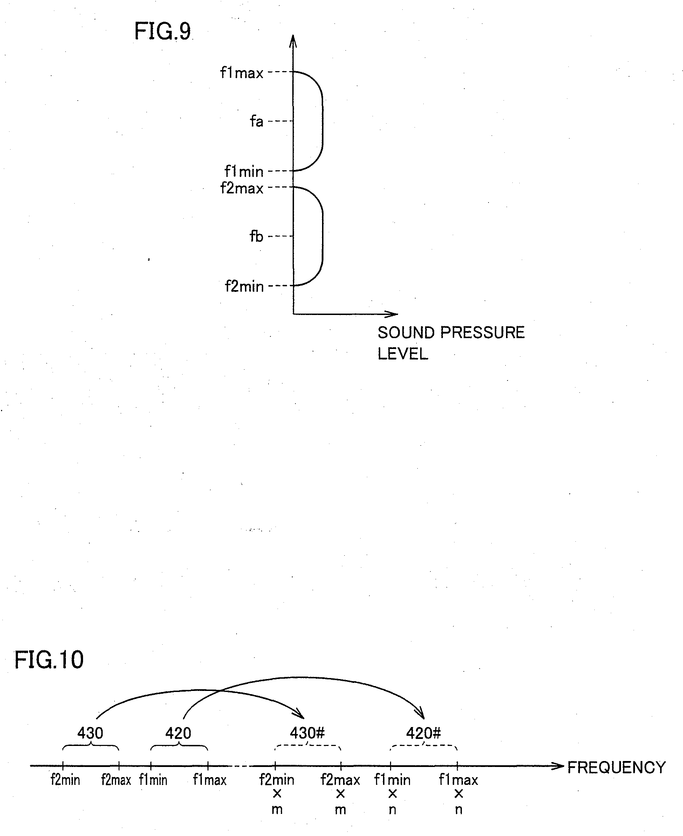

With reference to Fig. 9, the carrier frequency control as shown in Fig. 8 averages the sound pressure level of the noise that is caused by first inverter 210 and that of the noise that is caused by second inverter 220 within frequency range 420 (f1min-f1max) and frequency range 430 (f2min-f2max), respectively, and thus reduces them. Since these frequency ranges do not overlap, the inverters' overall noise has a sound pressure level reduced in each of frequency regions 420, 430 to a level similar to that indicated in Fig. 7 by sign 410.

As a result, a plurality of electric motors can be operated concurrently by operating a plurality of inverters (or current converters) concurrently while noise attributed to switching may be less perceivable by the user.

An example of setting a more preferable frequency range in the carrier frequency control according to the present embodiment is shown in Fig. 10.

With reference to Fig. 10, frequency range 420 where carrier frequency f1 changes and frequency range 430 where carrier frequency f2 changes are set to avoid overlapping each other, as shown in Fig. 8. Furthermore, preferably, frequency ranges 420 and 430 are set so that none of frequency range 420 multiplied by an integer, or a frequency range 420#, frequency range 430 multiplied by an integer, or a frequency range 430#, and frequency ranges 420 and 430 overlaps any other range. Note that frequency range 420# is indicated by f1min × n to f1max × n, n being a prescribed integer equal to or greater than 2. Similarly, frequency range 430# is indicated by f2min × m to f2max × m, m being a prescribed integer equal to or greater than 2.

This can also prevent a harmonic component from having an overlapping frequency range resulting in an increased sound pressure level, and thus allows a plurality of inverters (or current converters) to be concurrently operated further less noisily.

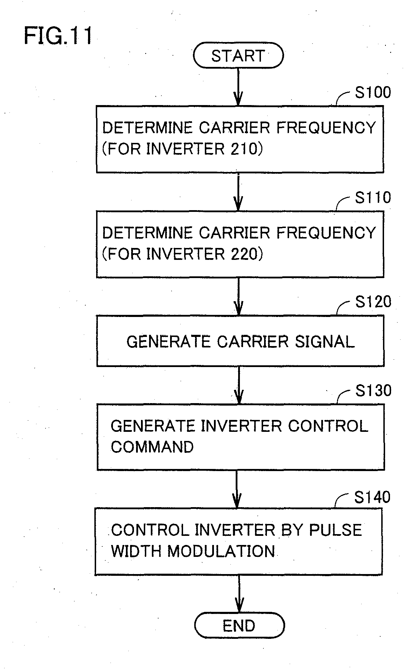

Fig. 11 is a flowchart for illustrating a procedure of a process for controlling a carrier frequency, as done by the electric motor control device according to the embodiment of the present invention. In order to perform the Fig. 11 process, a program therefor is previously stored in ECU 170. When MG 1 and MG 2 are operated, ECU 170 executes this program periodically.

With reference to Fig. 11, ECU 170 in Step S10 determines carrier frequency f1 for first inverter 210. Furthermore, ECU 170 in Step S 110 determines carrier frequency f2 for second inverter 220. Carrier frequencies f1 and f2 are set as shown in Fig. 8 or Fig. 10. In other words, carrier frequencies f1 and f2 are changed periodically or randomly as time elapses. Steps S 100 and S 110 correspond to a function of carrier frequency control unit 350 in Fig. 5.

ECU 170 in Step S120 generates carrier signals 160(1) and 160(2) in accordance with carrier frequencies f1 and f2 determined in Steps S100 and S 110. In other words, Step S120 corresponds to a function of carrier generation units 360, 365 in Fig. 5.

ECU 170 in step S 130 operates a control command for first inverter 210 and second inverter 220. Representatively, voltage commands Vu, Vv, Vw for the respective phases of the inverters are operated as the control command. Namely, the operation in step S 130 can be performed similarly to motor command operation unit 300, 305 in Fig. 5.

ECU 170 in step S 140 generates a signal for controlling switching on and off a switching element in first inverter 210 under PWM control comparing the control command for first inverter 210 with carrier signal 160(1). Furthermore, ECU 170 in step S 140 generates a signal for controlling switching on and off a switching element in second inverter 220 under PWM control comparing the control command for second inverter 220 with carrier signal 160(2).

By repeating steps S100 to S 140 periodically, PWM control in first inverter 210 and second inverter 220 controlling concurrently operated MG 1 and MG 2, respectively, can be carried out, by using a carrier signal in accordance with carrier frequency control in Figs. 8 and 10.

This allows a plurality of inverters to be concurrently operated less noisily and be thus less perceivably noisy to the user.

An electrically powered vehicle capable of travelling without an engine per se travels less noisily, and accordingly, the noise caused as an electric motor thereof is operated is more perceivable. The carrier frequency control according to the present embodiment can also be applied to an electrically powered vehicle, such as the Fig. 1 hybrid vehicle, having a plurality of electric motors (MG 1, MG 2) mounted therein, so that when the electric motors are concurrently operated the electric motors can be less perceivably noisy to the user.

Note that while the present embodiment has been described with a PWM-controlled power converter as an inverter by way of example, the present invention is not limited to this example. Namely, the switching frequency control according to the present embodiment is also similarly applicable to a configuration where a power converter other than an inverter, such as a converter, is subjected to PWM control.

Furthermore a "plurality of electric motors" to be controlled is not limited to the 3-phase motor generator illustrated in the present embodiment, and it may be a variety of types of direct current motors and alternate current motors or motor generators. Furthermore, the switching frequency control according to the present embodiment is of course also applied to a system in which three or more electric motors and power converters are concurrently operated.

Furthermore, the switching frequency control according to the present embodiment is applied to an electrically powered vehicle, which may be a hybrid vehicle of a driving force transmission configuration different than Fig. 1, an electric vehicle, a fuel cell powered vehicle and the like which do not have an engine mounted therein, and the like, as long as it has a plurality of concurrently operative electric motors (including motor generators) mounted therein. Furthermore, the present invention is applicable to any system in which a plurality of electric motors and a plurality of power converters which control these electric motors can operate concurrently, whether or not the system is mounted in an electrically powered vehicle.

It should be understood that the embodiments disclosed herein are illustrative and non-restrictive in any respect. The scope of the present invention is defined by the terms of the claims, rather than the description above, and is intended to include any modifications within the scope and meaning equivalent to the terms of the claims.

### INDUSTRIAL APPLICABILITY

The present invention is applicable to a system which operates a plurality of electric motors concurrently by the PWM control done by a plurality of power converters, respectively.

### REFERENCE SIGNS LIST

100: engine; 110: first motor generator (MG 1); 112,122: neutral point; 120: second motor generator (MG 2); 130: power split device; 140: speed reducer; 150: battery; 160(1), 160(2): carrier signal; 180: voltage sensor; 190: front wheel; 200: converter; 210: first inverter (MG 1); 220: second inverter (MG 2); 270: voltage command; 280: pulse width modulated voltage; 300, 305: motor command operation unit; 310, 315: pulse width modulation unit; 350: carrier frequency control unit; 360, 360: carrier generation unit; 400, 410: sound pressure distribution; 420, 430: frequency range; Imt(1), Imt(2): motor current; S 11-S16, S21-S26: control signal (inverter); Tqcom: torque command value; VH: system voltage; Vu, Vv, Vw: voltage command; f1min, f2min: lower limit value; f1, f2: carrier frequency; f1max, f2max: upper limit value; fa, fb: central frequency.

## Claims

1. An electric motor control device comprising:
a plurality of power converters (210, 220) associated with a plurality of electric motors (MG 1, MG 2), respectively, and each configured to include at least one switching element;
a plurality of motor command operation units (300, 305) associated with said plurality of electric motors, respectively, for each generating a control command (Vu, Vv, Vw) for one of a voltage and a current supplied to an associated one of said electric motors;
a plurality of carrier generation units (360, 365) associated with said plurality of electric motors, respectively;
a carrier frequency control unit (350) that controls in frequency a plurality of carrier signals (160(1), 160(2)) generated by said plurality of carrier generation units, respectively; and
a plurality of pulse width modulation units (310, 315) associated with said plurality of electric motors, respectively, wherein:
said plurality of pulse width modulation units each control switching on and off said switching element in an associated one of said power converters, based on a comparison between the control command issued from an associated one of said motor command operation units and the carrier signal issued from an associated one of said carrier generation units;
said carrier frequency control unit controls said plurality of carrier signals in frequency to fluctuate within a plurality of prescribed frequency ranges (420,430) associated with said plurality of carrier signals, respectively; and
said plurality of prescribed frequency ranges are previously set without overlapping one another.

2. The electric motor control device according to claim 1, wherein said plurality of prescribed frequency ranges (420, 430) are set such that none of said plurality of prescribed frequency ranges that are each multiplied by an integer (420#, 430#) and said plurality of prescribed frequency ranges overlaps one another.

3. The electric motor control device according to claim 1 or 2, wherein:
said plurality of electric motors are mounted in an electrically powered vehicle;
said plurality of power converters are each an inverter (210, 220); and
said control command indicates an alternating current voltage applied from said inverter to each phase of each said electric motor.

4. A method for controlling an electric motor, comprising the steps of:
controlling (S100, S110) in frequency a plurality of carrier signals (160(1), 160(2)) used to control a plurality of power converters (210, 220) associated with a plurality of electric motors (MG 1, MG 2), respectively, and each including at least one switching element;
generating (S120) said plurality of carrier signals in accordance with a plurality of carrier frequencies, respectively, determined in the step of controlling;
generating (S130) a control command (Vu, Vv, Vw) for one of a voltage and a current each supplied to one of said plurality of electric motors; and
generating (S 140) a signal to control switching on/off said switching element, based on a comparison between said control command and an associated one of said carrier signals, for each of said plurality of electric motors, wherein:
the step of controlling (S 100, S 110) controls said plurality of carrier frequencies to fluctuate within a plurality of prescribed frequency ranges (420, 430) associated with said plurality of carrier signals, respectively; and
said plurality of prescribed frequency ranges are previously set without overlapping one another.

5. The method for controlling an electric motor according to claim 4, wherein said plurality of prescribed frequency ranges (420, 430) are set such that none of said plurality of prescribed frequency ranges that are each multiplied by an integer (420#, 430#) and said plurality of prescribed frequency ranges overlaps one another.

6. The method for controlling an electric motor according to claim 4 or 5, wherein:
said plurality of electric motors are mounted in an electrically powered vehicle;
said plurality of power converters are each an inverter (210, 220); and
said control command indicates an alternating current voltage applied from said inverter to each said electric motor.
